# EUROPEAN PATENT APPLICATION

(11) **EP 2 952 739 A1**
(43) Date of publication of application: **09.12.2015**
(21) Application number: 14171377.6
(22) Date of filing: 05.06.2014
(51) Int. Cl.: F03D 11/00, F03D 1/06

(54) **A root bushing for a blade root of a wind turbine rotor blade, a blade root, a wind turbine rotor blade and a wind turbine**

(71) Applicant: Siemens Aktiengesellschaft, 80333 München (DE)
(72) Inventor: Kratmann, Kasper Koops, 8700 Horsens (DK)

(57) **Abstract**

A root bushing (9) for a blade root (8) of a wind turbine rotor blade (5), wherein the root bushing (9) comprises a bushing body (14) and a connecting body (15) for connecting the wind turbine rotor blade (5) to a hub (6) of a wind turbine (1) and wherein the connecting body (15) is releasably connected to the bushing body (14).

This has the advantage that when the connecting body is damaged or worn out it can be replaced without replacing the whole root bushing.

## Description

The present invention relates to a root bushing for a blade root of a wind turbine rotor blade, to a blade root, to a wind turbine rotor blade and to a wind turbine.

Modern wind turbine rotor blades are built from fiber-reinforced plastics. A rotor blade typically comprises an airfoil having a rounded leading edge and a sharp trailing edge. The rotor blade is connected with its blade root to a hub of the wind turbine. The blade root comprises a plurality of root bushings. The root bushings can be provided with an internal thread. Bolts are engaged with theses threads to connect the blade root to the hub. EP 1 486 415 A1 describes such a root bushing.

It is one object of the present invention to provide an improved root bushing for a blade root of a wind turbine rotor blade.

Accordingly, a root bushing for a blade root of a wind turbine rotor blade is provided, wherein the root bushing comprises a bushing body and a connecting body for connecting the wind turbine rotor blade to a hub of a wind turbine, wherein the connecting body is releasably connected to the bushing body.

In particular, the connecting body is separable from the bushing body. The root bushing is advantageous in that when the connecting body is damaged or worn out it can be replaced without replacing the whole root bushing. This means, the connecting body can be replaced by a new one with only a minimum repair to the blade composite material afterwards. In contrast to that, rotor blades with known root bushings comprising a thread being directly cut into the material of the root bushing have to be replaced completely when the thread of the root bushing is damaged.

According to an embodiment, the connecting body is separable from the bushing body in a non-destructive manner. Preferably, the connecting body is substantially loose connected to the bushing body.

According to a further embodiment, the connecting body is separable from the bushing body in a toolfree manner. This enables an easy change of the connecting body.

According to a further embodiment, the connecting body is interchangeable.

According to a further embodiment, the connecting body is positive-fitted and/or force fitted to the bushing body. This prevents a relative movement between the connecting body and the bushing body. Thus, wear between the two parts is prevented.

According to a further embodiment, the bushing body comprises a receiving section for receiving the connecting body. The receiving section may be a bore.

According to a further embodiment, the connecting body has a curved front face and wherein the receiving section is shaped corresponding to the curved front face of the connecting body. Preferably, a surface between the front face and the receiving section has a spheric curvature. Due to the spheric curvature, the demands of perpendicularity between the receiving section and the connecting body can be lowered which reduces the costs to produce the parts. Alternatively the front face and the corresponding receiving section can have a flat, a triangular, a sinusoidal or any other geometry. According to a further embodiment, wherein the connecting body has a cylindrical shape with a centered thread. The thread is cut into a central bore provided in the connecting body. Preferably, the connecting body has a circular cross-section.

According to a further embodiment, the bushing body comprises a cylindrical basic portion and a slanted extension portion, wherein the cylindrical basic portion and the slanted extension portion are made of one piece. Preferably, the bushing body is made of a metal alloy. In particular, the extension portion has a gradually reduced cross-section to a pointed or nearly pointed end. Thus, the extension portion has a gradually increased flexibility.

According to a further embodiment, connecting body is receivable in the cylindrical basic portion. In particular, the basic portion comprises the receiving section.

According to a further embodiment, the bushing body and the connecting body are made of different materials. With known root bushings, the choice of material is predicted by the required strength of the threaded part of the root bushing. By providing the connecting body as a separate part, a weaker and thus cheaper material may be used for the bushing body.

According to a further embodiment, the material which the connecting body is made of has a higher strength than the material which the bushing body is made of. In particular, the material which the connecting body is made of has a higher grade than the material which the bushing body is made of.

Further, a blade root of a wind turbine rotor blade comprising such a root bushing is provided.

Further, a wind turbine rotor blade comprising such a root bushing and/or such a blade root is comprised.

Further, a wind turbine comprising such a root bushing, such a blade root and/or such a wind turbine rotor blade is provided.

"Wind turbine" presently refers to an apparatus converting the wind's kinetic energy into rotational energy, which may again be converted to electrical energy by the apparatus.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 is a perspective view of a wind turbine according to one embodiment;
Fig. 2 is a perspective view of a wind turbine rotor blade according to one embodiment;
Fig. 3 is an end view of the wind turbine rotor blade according to Fig. 2;
Fig. 4 is a sectional view of a root bushing for a root of the wind turbine blade according to Fig. 2; and
Fig. 5 is another sectional view of the root bushing according to Fig. 4.

In the Figures, like reference numerals designate like or functionally equivalent elements, unless otherwise indicated.

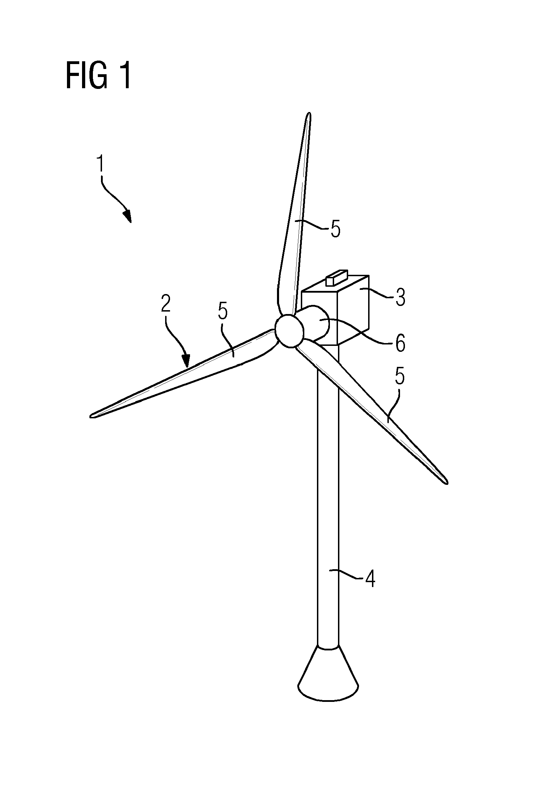

Fig. 1 shows a wind turbine 1 according to an embodiment. The wind turbine 1 comprises a rotor 2 connected to a generator (not shown) arranged inside a nacelle 3. The nacelle 3 is arranged at the upper end of a tower 4 of the wind turbine 1.

The rotor 2 comprises three blades 5. The blades 5 are connected to a hub 6 of the wind turbine 1. Rotors 2 of this kind may have diameters ranging from, for example, 30 to 160 meters. The blades 5 are subjected to high wind loads. At the same time, the blades 5 need to be lightweight. For these reasons, blades 5 in modern wind turbines 1 are manufactured from fiber-reinforced composite materials. Therein, glass fibers are generally preferred over carbon fibers for cost reasons. Oftentimes, glass fibers in the form of unidirectional fiber mats are used.

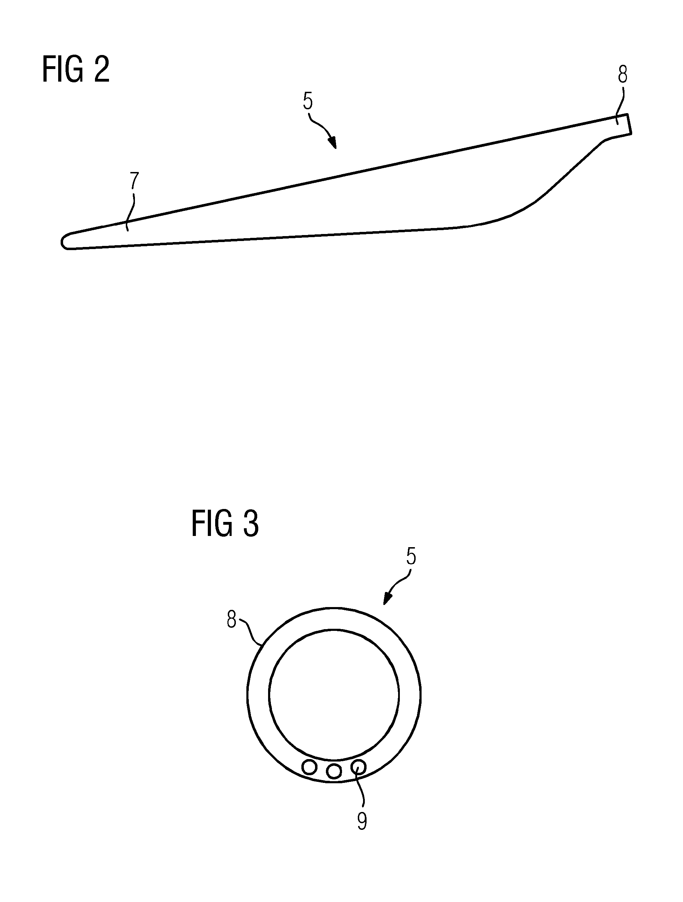

Fig. 2 shows a blade 5 according to one embodiment.

The blade 5 comprises an aerodynamically designed portion 7, which is shaped for optimum exploitation of the wind energy and a blade root 8 for connecting the blade 5 to the hub 6. The blade 5 may be fixed to the hub 6 by means of bolts.

Fig. 3 shows an end view of the blade root 8.

The blade root 8 comprises a plurality of root bushings 9 for a releasable connection of the blade 5 to the hub 6. The root bushings 9 are embedded in the blade root 8 so that bolts (not shown) can be screwed into an internal thread of the root bushings 9 for a firm but releasable engagement therewith. The number of root bushings 9 is arbitrarily. In Fig. 3 only three root bushings 9 are shown.

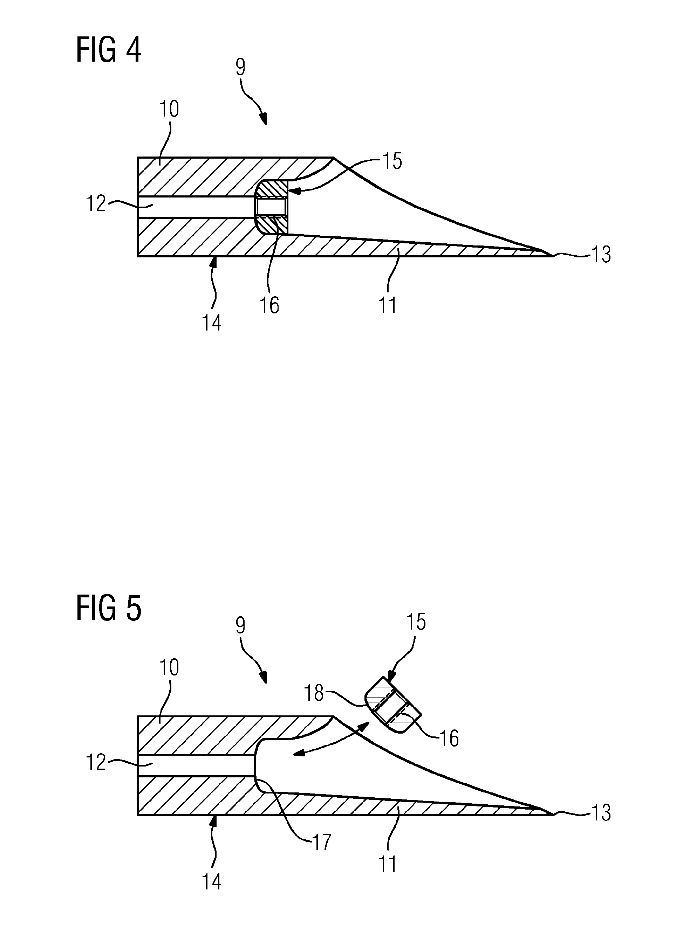

Figs. 4 and 5 are longitudinal sections of a root bushing 9.

In the following, Figs. 4 and 5 are referred to at the same time. The root bushing 9 comprises a basic portion 10 and an extension portion 11. The basic portion 10 is cylindrical or tube shaped and has a central bore 12. The extension portion 11 is slanted and has a gradually reduced cross-section to a pointed or nearly pointed end 13. Thus, the extension portion 11 has a gradually increased flexibility. Preferably, the basic portion 10 and the extension portion 11 are made of one piece. The basic portion 10 and the extension portion 11 together constitute a bushing body 14 of the root bushing 9. The bushing body 14 may be made of a metal alloy.

The root bushing 9 further comprises a connecting body 15 for connecting the blade 5 to the hub 6 of the wind turbine. The connecting body 15 has a cylindrical geometry with a circular cross-section. The connecting body 15 has a centered thread 16. The connecting body 15 is releasable connected to the bushing body 14. In particular, the connecting body 15 is inserted into the bushing body 14. The connecting body 15 is made of a metal alloy. The connecting body 15 is separable from the bushing body 14 in a non-destructive and/or toolfree manner. The connecting body 15 is interchangeable so that when the connecting body 15 is damaged it can easily be replaced by a new one with only a minimum of repair to the blade composite material afterwards. Blades that comprise known root bushings with threads being cut directly into the material of the root bushings must be replaced completely when the thread is damaged.

The bushing body 14 comprises a receiving section 17 for receiving the connecting body 15. The receiving section 17 may be part of the cylindrical basic portion 10 so that the connecting body 15 is receivable in the basic portion 10. The receiving section 17 is formed correspondingly to an outer geometry of the connecting body 15. As shown in Figs. 4 and 5, the connecting body 15 has a curved front face 18. The receiving section 17 is shaped corresponding to the curved front face 18. The curved front face 18 has a spheric curvature. Due to the spheric surface between the front face 18 and the receiving section 17, the demands of perpendicularity between the connecting body 15 and the bushing body 14 can be lowered. Alternatively, the front face 18 and the receiving section 17 may be flat, triangular or sinusoidal or may have any other curvature. The connecting body 15 is force-fitted and/or force fitted to the bushing body 14.

Preferably, the bushing body 14 and the connecting body 15 are made of different materials. The material which the connecting 15 is made of has a higher grade or strength than the material which the bushing body 14 is made of. In particular, the material the bushing body 14 is made of is cheaper.

In Fig. 4 the connecting body 15 is shown being inserted into the receiving section 17 of the bushing body 14 and in Fig. 5 the connecting body 15 is shown being taken out of the receiving section 17.

Although the present invention has been described in accordance with preferred embodiments, it is obvious for the person skilled in the art that modifications are possible in all embodiments.

## Claims

1. A root bushing (9) for a blade root (8) of a wind turbine rotor blade (5), wherein the root bushing (9) comprises a bushing body (14) and a connecting body (15) for connecting the wind turbine rotor blade (5) to a hub (6) of a wind turbine (1) and wherein the connecting body (15) is releasably connected to the bushing body (14).

2. The root bushing according to claim 1, wherein the connecting body (15) is separable from the bushing body (14) in a non-destructive manner.

3. The root bushing according to claim 1 or 2, wherein the connecting body (15) is separable from the bushing body (14) in a toolfree manner.

4. The root bushing according to one of claims 1 - 3, wherein the connecting body (15) is interchangeable.

5. The root bushing according to one of claims 1 - 4, wherein the connecting body (15) is positive-fitted and/or force fitted to the bushing body (14).

6. The root bushing according to one of claims 1 - 5, wherein the bushing body (14) comprises a receiving section (17) for receiving the connecting body (15).

7. The root bushing according to claim 6, wherein the connecting body (15) has a curved front face (18) and wherein the receiving section (17) is shaped corresponding to the curved front face (18) of the connecting body (15).

8. The root bushing according to one of claims 1 - 7, wherein the connecting body (15) has a cylindrical shape with a centered thread (16).

9. The root bushing according to one of claims 1 - 8, wherein the bushing body (14) comprises a cylindrical basic portion (10) and a slanted extension portion (11), wherein the cylindrical basic portion (10) and the slanted extension portion (11) are made of one piece.

10. The root bushing according to claim 9, wherein the connecting body (15) is receivable in the cylindrical basic portion (10).

11. The root bushing according to one of claims 1 - 10, wherein the bushing body (14) and the connecting body (15) are made of different materials.

12. The root bushing according to claim 11, wherein the material which the connecting body (15) is made of has a higher strength than the material which the bushing body (14) is made of.

13. Blade root (8) of a wind turbine rotor blade (5) comprising a root bushing (9) according to one of claims 1 - 12.

14. Wind turbine rotor (5) blade comprising a root bushing (9) according to one of claims 1 - 12 and/or a blade root (8) according to claim 13.

15. Wind turbine (1) comprising a root bushing (9) according to one of claims 1 - 12, a blade root (8) according to claim 13 and/or a wind turbine rotor blade (5) according to claim 14.
